# EUROPEAN PATENT SPECIFICATION

(11) **EP 0 689 745 B1**
(45) Date of publication and mention of the grant of the patent: **14.11.2001**
(21) Application number: 94909143.3
(22) Date of filing: 14.03.1994
(51) Int. Cl.: H04L 12/46, H04L 12/56

(54) **METHOD FOR SYNCHRONIZING INTERCONNECTED SDH AND PDH TELECOMMUNICATIONS NETWORKS**
VERFAHREN ZUR SYNCHRONISATION VON VERBUNDENEN SDH- UND PDH-FERNMELDENETZEN
PROCEDE DE SYNCHRONISATION DE RESEAUX INTERCONNECTES DE TELECOMMUNICATION A HIERARCHIE NUMERIQUE PLESIOCHRONE ET A HIERARCHIE NUMERIQUE SYNCHRONE

(30) Priority: 16.03.1993 FI 931166
(43) Date of publication of application: 03.01.1996
(73) Proprietor: Nokia Networks Oy, 02150 Espoo (FI)
(72) Inventor: PELTOMÄKI, Arto, FIN-02710 Espoo (FI); HYYTIÄ, Simo, FIN-02940 Espoo (FI)
(74) Representative: Johansson, Folke Anders
(86) International application number: FI9400094
(87) International publication number: WO9422251

(56) References cited:
- EP-A- 0 453 876
- EP-A- 0 522 748
- EP-A- 0 563 511
- US-A- 5 172 376

## Description

The invention relates to a method for synchronizing interconnected SDH and PDH telecommunications networks.

Since drawbacks of the present Plesiochronous Digital Hierarchy (PDH) have led to a definition of a new Synchronous Digital Hierarchy (SDH), there will also be a need to transfer data between said networks in the future. The problem is then how to interconnect these networks, as far as synchronization is concerned. The easiest manner coming to mind first is to provide the PDH network with a separate synchronizing input, to which is fed the same synchronizing signal that synchronizes the SDH network. However, the problem of such a solution is that the networks adopt their own internal timings in case the synchronizing signal is interrupted and no common master node is found any longer.

Document EP 522 748 shows a SDH data transmission timing means where the bearer rate signal is estimated through the system by synchronizing successive equipment in the network path and subsequently deriving from the final bearer a timing signal back at the original frequency.

The object of the present invention is to provide a method by means of which it is possible to transmit a timing (synchronization) between the SDH and PDH networks in such a way that a master node is found with the greatest possible certainty also in failure cases. This object is achieved by means of the method of the invention, which is characterized in what is described in the characterizing portion of the enclosed claim 1.

The basic idea according to the invention is that the SDH and PDH networks are synchronised by synchronizing the PDH network with the SDH network, whereby the method according to the invention comprises:
providing a signal to be transmitted to a PDH network in a device of the SDH network connected to the PDH network with at least one status bit (lcb, mcb) for Loop Protected (LP) synchronization,
receiving the signal at the PDH network,
detecting the at least one status bit from the received signal by using rules of interpretation, and
synchronizing the PDH network with the SDH network using the detected at least one status bit for LP synchronization. The synchronization thus works in the interconnected network without any changes having to be made in the PDH network.

In the following, the invention will be described in greater detail with reference to embodiments according to the enclosed drawings, in which
Figure 1 shows an LP synchronization known per se in a network comprising five nodes,
Figures 2a to 2c illustrate the operation of the network according to Figure 1 in case of failure,
Figure 3 shows PDH and SDH networks interconnected according to the invention, and
Figure 4 shows timing in a loop network, which comprises a SDH network node and PDH network nodes.

In present (plesiochronous) telecommunications systems, a synchronization may be performed either by means of separate synchronizing connections or by utilizing normal data connections between the nodes (devices) of the system. Separate synchronizing connections are used in individual cases only and very seldom for the synchronization of a whole network. When data connections are used for the synchronization, such a line code is needed that the nodes are capable of extracting also the clock frequency of an incoming data signal. From these clock frequencies, the synchronization of the nodes of the network may be performed by two different basic methods: mutual synchronization and master-slave synchronization. In mutual synchronization, each node generates its own clock frequency from the average of the frequencies of incoming signals and its own clock frequency at the moment. Thus all nodes of the network are driven towards a common average frequency and in a stable state they have achieved it. However, a network using mutual synchronization cannot be synchronized with a desired source, which makes an interconnection of different networks problematic, because the operating frequency of the whole network cannot then be predetermined accurately. In master-slave synchronization instead, all nodes of the network are synchronized with the clock frequency of one master node. Each node selects the frequency of one incoming signal as the source of its own clock frequency. The node tries to select a signal having the clock frequency of the master node of the network.

In independent master-slave synchronization, each node makes its own decision on synchronization, without receiving any information supporting the decision-making from outside. Since the nodes make their decisions on synchronization independently, each node must be provided with definitions of with which node to be synchronized. These definitions are often made in the form of a priority list, whereby a node selects that signal from the usable incoming signals as the source of its synchronization which has the highest priority, i.e. the one which is highest on the list. If this signal is interrupted or its quality becomes weaker so that it cannot be qualified as the source of synchronization any longer, the node selects from the list the signal which has the next highest priority. The priority list shall be composed in such a way that all nodes on it are situated between the node in question and the master node, whereby the synchronization spreads from the master node to lower levels.

However, independent master-slave synchronization causes restrictions for the synchronization of the network: in a loop network, all connections cannot be used for the synchronization, due to which the dynamic adaptability of the network is restricted in different situations. Communication has to be brought between the nodes for the purpose that the amount of information of a separate node would be sufficient for decision-making in all situations, without a necessity of restricting heavily the amount of connections to be used for the synchronization, in which case the clock frequency of the master node cannot be spread equally well to the nodes of the network in failure conditions.

The simplest method of expanding the independent master-slave synchronization to a communicating one is a so-called LP (loop protected) synchronization. LP synchronization tries to prevent the timing of loop networks from getting in disorder by using two status bits mcb and lcb to support the above-mentioned priority lists, which bits are transmitted between the nodes of the network. The first status bit mcb (master control bit) indicates whether the synchronization comes from the master node of the network. The master node defined for the network transmits this bit as a logic zero in its outgoing signals and the other nodes transmit it forward, in case they are synchronized with a signal the value of the mcb of which is zero. The second status bit lcb (loop control bit) indicates whether there is a loop in the synchronization. Each node of the network transmits this bit as a logic number one in the direction with which the node itself is synchronized and as a logic zero in the other directions.

Each node uses its own priority list for a selection of the source of synchronization, but checks, except the status of the signal, also the bits mcb and lcb before the selection. Primarily, the node tries to find such a connection the clock frequency of which comes from the master node of the network (mcb = 0). If no such connection is found (due to a failure condition), the node selects in a conventional way the working connection which is highest on the priority list. However, of the selected connection (source of timing) is always expected that its timing is not in the loop (lcb = 0), even if the signal itself otherwise would be usable for synchronization.

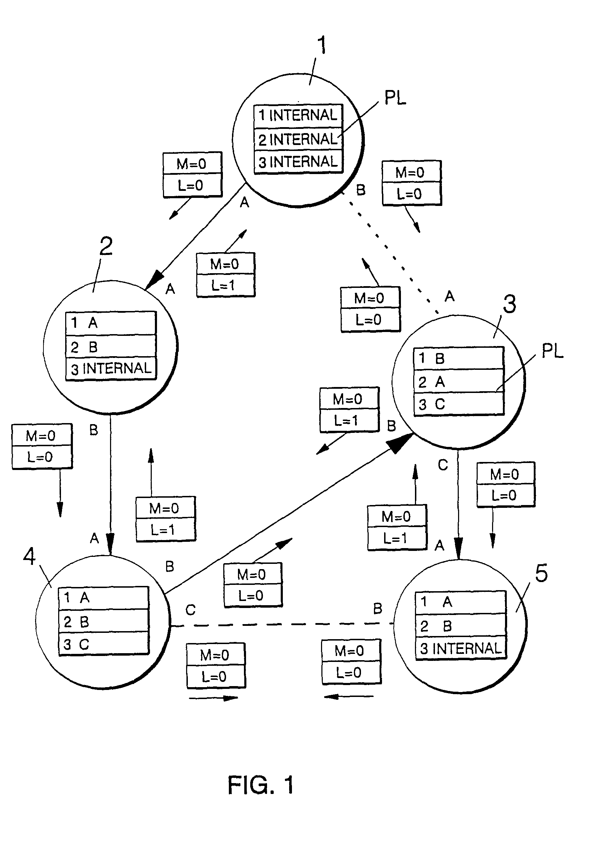

Figure 1 shows an example of a telecommunications network comprising five nodes 1 to 5, which network uses the LP synchronization described above. The bits mcb and lcb transmitted by each node in different directions are indicated at the nodes by reference marks M (mcb) and L (lcb), respectively. When merely a priority list is used, a synchronization tree is composed of tree-like hierarchic structures, while in LP synchronization the synchronization tree is composed by means of loops. At first is formed a master loop, in which the master node of the network is situated, and then nodes are added to the synchronization tree chain by chain, until all nodes are included. Priority lists are composed according to the loops and chains. In the example of Figure 1, the master loop comprises the nodes 1, 2, 4 and 3, in this order. To this master loop is connected a one node chain (node 5).

In Figure 1, the priority lists used by the nodes are indicated by reference mark PL. Reference marks A, B and C designate incoming signals of each node. On the priority list PL of the master node 1, there are no incoming signals at all, but the master node always uses its internal oscillator as the source of its synchronization. The connections not used by the synchronization are indicated by broken lines in the figure.

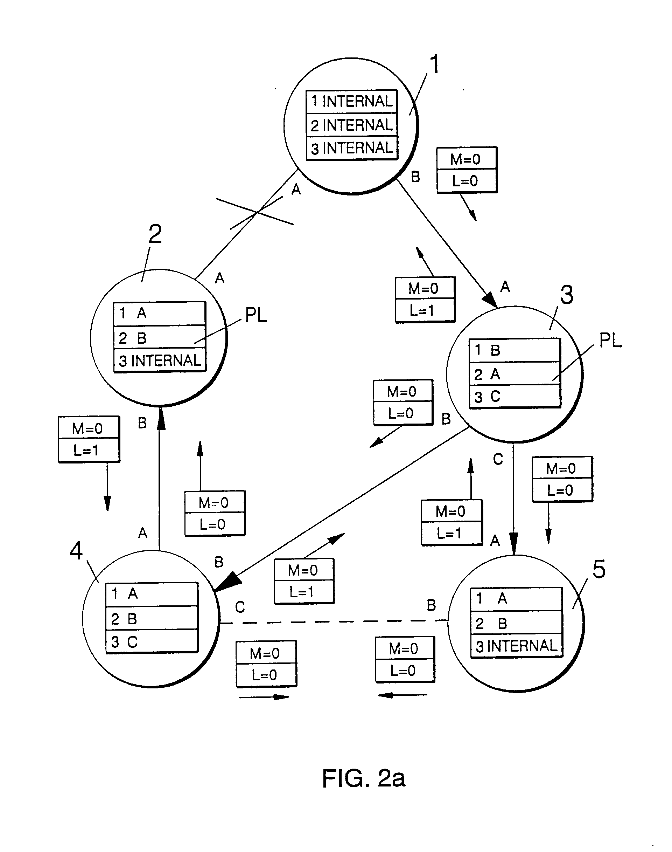

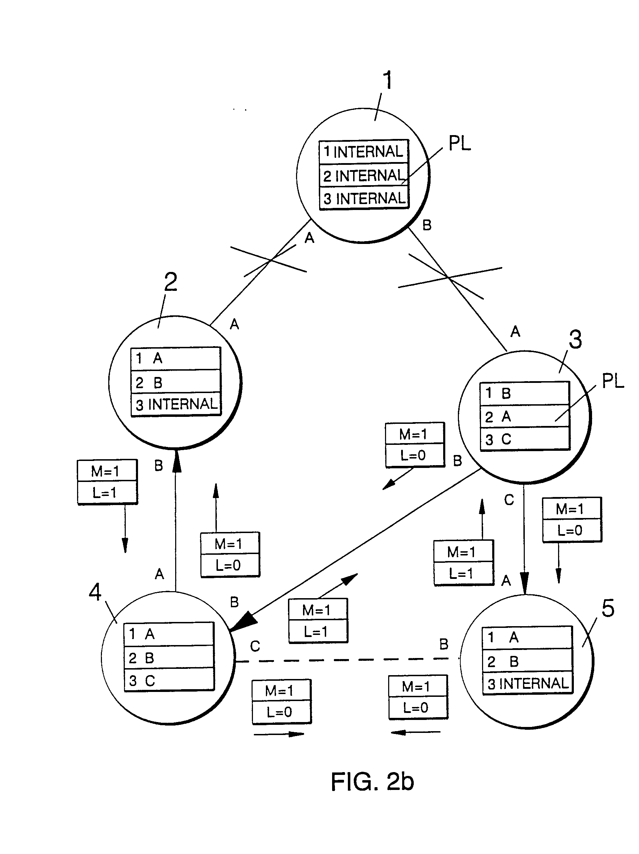

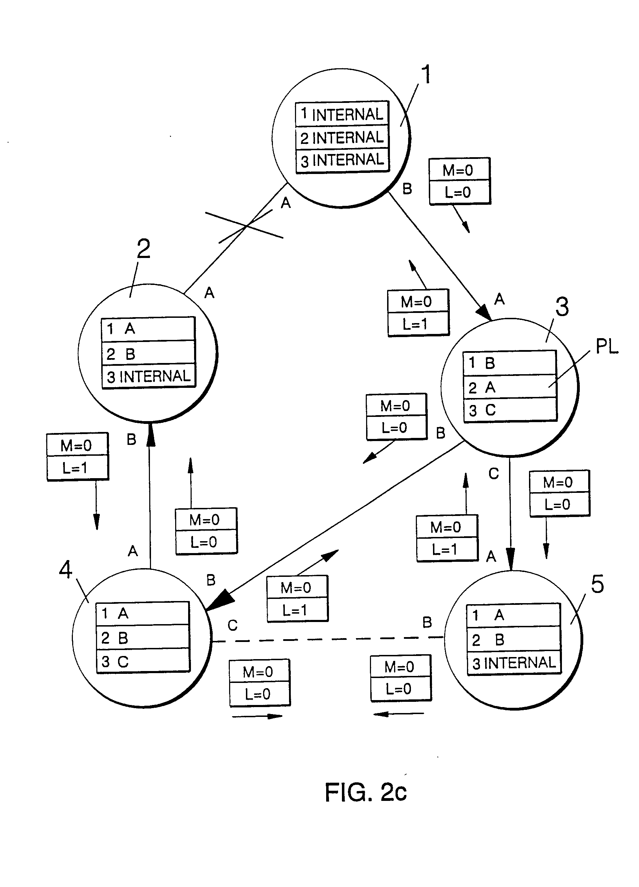

Figures 2a to 2c illustrate the behaviour of a network using LP synchronization (Figure 1) in a failure condition. At the first stage shown in Figure 2a, the connection between the master node 1 and the node 2 is interrupted. After this, the network receives synchronization from the master node 1 via the node 3. At the second stage shown in Figure 2b, the connection is interrupted also between the nodes 1 and 3, whereby the new master node will be the node 3, which was the last to forward the frequency of the master node to the network. The mcb sent by the node 3 has now changed into a logic number one to indicate that there exists no connection with the official master node of the network any longer. At the third stage of Figure 2c, the failure between the nodes 1 and 3 is repaired and the network is resynchronized with its original master node.

LP synchronization is described in more detail in a Master's Thesis by Jukka Kainulainen, Technical University, Faculty of Information Technology, Espoo 1993, "Sanomapohjainen alistuva synkronointi digitaalisissa televerkoissa" (Message-based master-slave synchronization in digital telecommunication networks), which is referred to for a more accurate description.

In a SDH network, nodes are not synchronized with each other in the above manner, but a Section OverHead (SOH) of a STM-1 frame will obviously utilize at least one synchronization byte for synchronizing the nodes with each other.

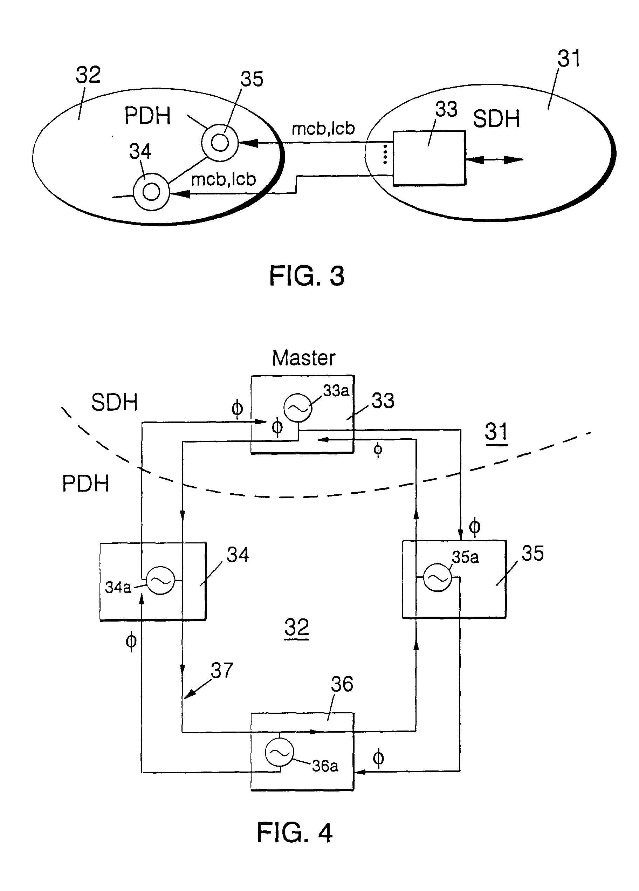

The idea of the present invention is to utilize the LP synchronization described above for synchronizing a PDH and a SDH network with each other. Figure 3 shows a SDH network 31 and a PDH network 32, which are interconnected by coupling a device 33 of the SDH network to nodes 34 and 35 of the PDH network. A typical SDH device 33 comprises 63 interfaces of 2048 kbit/s (because an STM-1 frame typically includes 63 channels of 2048 kbit/s). According to the invention, a signal to be transmitted to such a PDH network is provided in the SDH device with status bits mcb and lcb to be used for LP synchronization in such a way that these bits are interpretable in the PDH network (in a node of the PDH network) by using rules of interpretation known per se. A common "synchronization" language can thus be constructed between the networks without a necessity of making changes in the PDH network. Such status bits are not necessarily used in all signals to be transferred from the SDH network to the PDH network, but the timing is indicated typically in one direction or two directions (depending on the topology of the network). The status bits mcb and lcb may be transferred e.g. in a time slot zero (TS0) of a 2048 kbit/s signal. The status bits may be added to the 2048 kbit/s signal by generating them by means of software in an output buffer of this 2048 kbit/s signal. The bits may be detected by reading them by means of software from an input buffer of the 2048 kbit/s signal.

If the lcb of two equivalent signals coming to a node of the PDH network has the value "0", a selection is made by means of the mcb by selecting the signal the mcb of which is zero. The two tables below show the values of the status bits in different cases. The first table concerns an alternative of using both status bits and the second table an alternative of using the Icb only.

| Timing of SDH network | lcb value | mcb value |
|---|---|---|
| external I | 0 | 0 |
| internal I | 0 | 0 |
| external II | 1 | 0 |
| internal II | 0 | 1 |

| Timing of SDH network | lcb value |
|---|---|
| external I | 0 |
| internal I | 0 |
| external II | 1 |
| internal II | 0 |

In the tables, the terms indicating the timing of an SDH network signify as follows:
- external I: timing from an external clock oscillator, a device (node) being defined as the master node of interconnected SDH and PDH networks,
- internal I: timing from an internal clock oscillator and a device (node) defined as the master node of the interconnected SDH and PDH networks,
- external II: the SDH network receives its timing from a clock signal coming from the PDH network to the SDH network, and
- internal II: timing from an internal clock oscillator.

Figure 4 shows the principle of the invention concerning timing in a loop network, which comprises a node 33 of a SDH network and nodes 34, 35 and 36 of a PDH network. The master node of the whole network is in this case the node 33, a clock signal of a clock oscillator 33a of which is transmitted over a loop 37 to 35 synchronizing means (34a, 36a and 35a) of all other nodes, whereby an outgoing signal of each node has the same frequency φ defined by the master node 33 of the network. In this case, the status bits transmitted by the node 33 to the PDH network have the value "0", because the node 33 has been defined as the master node of the interconnected network.

Though the invention has above been described referring to the examples according to the attached drawings, it is obvious that the invention is not restricted to that, but it can be modified within the scope of the inventive idea set forth above and in the attached claims.

## Claims

1. A method for synchronizing interconnected Synchronous Digital Hierarchy (SDH) and Plesiochronous Digital Hierarchy (PDH) telecommunications networks (31, 32), **characterized in that** the SDH and PDH networks are synchronised by synchronizing the PDH network with the SDH network, whereby the method comprises:
providing a signal to be transmitted to a PDH network in a device (33) of the SDH network (31) connected to the PDH network with at least one status bit (lcb, mcb) for Loop Protected (LP) synchronization,
receiving the signal at the PDH network,
detecting the at least one status bit from the received signal by using rules of interpretation, and
synchronizing the PDH network with the SDH network using the detected at least one status bit for LP synchronization.

2. A method according to claim 1, **characterized in that** the method further comprises:
adding to the signal to be transmitted from the SDH network (31) to the PDH network (32) both a loop control bit (lcb) indicating whether there is a loop in the synchronization and a master control bit (mcb) indicating whether the synchronization comes from the master node of the interconnected network.

3. A method according to claim 1 or 2, **characterized in that** the method further comprises:
buffering the signal to be transmitted in an output buffer in the SDH network,
generating the at least one status bit to the signal to be transmitted in the output buffer,
buffering the received signal in an input buffer in the PDH network, and
detecting the at least one status bit from the received signal in the input buffer by reading the at least one status bit from the input buffer by using rules of interpretation.

## Patentansprüche

1. Verfahren zur Synchronisation von verbundenen Telekommunikationsnetzwerken (31, 32) mit synchroner digitaler Hierarchie (SDH) und mit plesiochroner digitaler Hierarchie (PDH), **dadurch gekennzeichnet, dass** die SDH- und PDH- Netzwerke synchronisiert werden, indem das PDH-Netzwerk mit dem SDH-Netzwerk synchronisiert wird, wobei das Verfahren umfasst:
Bereitstellen eines zu einem PDH-Netzwerk zu übertragenden Signal in einer Vorrichtung (33) des an das PDH-Netzwerk angeschlossenen SDH-Netzwerks (31) mit zumindest einem Statusbit (lcb, mcb) zur schleifengeschützten (LP) Synchronisation,
Empfangen des Signals an dem PDH-Netzwerk,
Erfassen des zumindest einen Statusbits aus dem empfangenen Signal unter Verwendung von Interpretationsregeln, und
Synchronisieren des PDH-Netzwerks mit dem SDH-Netzwerk unter Verwendung des erfassten zumindest einen Statusbits zur LP-Synchronisation.

2. Verfahren nach Anspruch 1, **dadurch gekennzeichnet, dass** das Verfahren zudem umfasst:
Hinzufügen zu dem von dem SDH-Netzwerk (31) zu dem PDH-Netzwerk (32) zu übertragenden Signal von sowohl einem Schleifensteuerungsbit (lcb), welches anzeigt, ob es eine Schleife in der Synchronisation gibt, als auch von einem Mastersteuerungsbit (mcb), welches anzeigt, ob die Synchronisation von dem Masterknoten des verbundenen Netzwerks kommt.

3. Verfahren nach Anspruch 1 oder 2, **dadurch gekennzeichnet, dass** das Verfahren zudem umfasst:
Zwischenspeichern des zu übertragenden Signals in einem Ausgangszwischenspeicher in dem SDH-Netzwerk,
Erzeugen des zumindest einen Statusbits zu dem zu übertragenden Signal in dem Ausgangszwischenspeicher,
Zwischenspeichern des empfangenen Signals in einem Eingangszwischenspeicher in dem PDH-Netzwerk, und
Erfassen des zumindest einen Statusbits von dem empfangenen Signal in dem Eingangszwischenspeicher durch Lesen des zumindest einen Statusbits aus dem Eingangszwischenspeicher unter Verwendung von Interpretationsregeln.

## Revendications

1. Procédé de synchronisation de réseaux interconnectés de télécommunication (31, 32) à hiérarchie numérique synchrone (SDH) et à hiérarchie numérique plésiochrone (PDH),
**caractérisé en ce que** les réseaux SDH et PDH sont synchronisés en synchronisant le réseau PDH avec le réseau SDH, dans lequel le procédé comprend :
l'apport d'un signal à transmettre à un réseau PDH dans un dispositif (33) du réseau SDH (31) connecté au réseau PDH avec au moins un bit d'état (lcb, mcb) pour une synchronisation en boucle protégée (LP),
la réception du signal dans le réseau PDH,
la détection d'au moins le bit d'état provenant du signal reçu en utilisant des règles d'interprétation, et
la synchronisation du réseau PDH avec le réseau SDH en utilisant au moins le bit d'état détecté pour une synchronisation LP.

2. Procédé selon la revendication 1,
**caractérisé en ce que** le procédé comprend en outre :
l'ajout au signal à transmettre depuis le réseau SDH (31) jusqu'au réseau PDH (32), à la fois d'un bit de contrôle en boucle (lcb) indiquant s'il y a une boucle dans la synchronisation et un bit maître de contrôle (mcb) indiquant si la synchronisation vient du noeud maître du réseau interconnecté.

3. Procédé selon la revendication 1 ou 2,
**caractérisé en ce que** le procédé comprend en outre :
la mise en mémoire tampon du signal à transmettre dans un mémoire tampon de sortie dans le réseau SDH,
la génération d'au moins le bit d'état au signal à transmettre dans la mémoire tampon de sortie,
la mise en mémoire tampon du signal reçu dans une mémoire tampon d'entrée dans le réseau PDH, et
la détection d'au moins le bit d'état provenant du signal reçu dans la mémoire tampon d'entrée en lisant au moins le bit d'état de la mémoire tampon d'entrée en utilisant des règles d'interprétation.
